# EUROPEAN PATENT SPECIFICATION

(11) **EP 2 439 184 B1**
(45) Date of publication and mention of the grant of the patent: **05.12.2018**
(21) Application number: 10186559.0
(22) Date of filing: 05.10.2010
(51) Int. Cl.: C05F 11/00, C05F 11/04, A01G 31/00, A01G 24/00

(54) **Method for producing coco peat plant growth substrate, coco peat plant growth substrate and the use thereof**
Verfahren zur Herstellung von Kokospalmentorfpflanzenwachstumssubstrat, Kokospalmentorfpflanzenwachstumssubstrat und Verwendung dafür
Procédé de production de substrat de croissance de plantes à base de tourbe de coco et son utilisation

(43) Date of publication of application: 11.04.2012
(73) Proprietor: Shakti Cocos B.V., 3155 DE Maasland (NL)
(72) Inventor: van Gils, Cornelis Marinus, 2287 RC, Rijswijk (NL)
(74) Representative: van Kooij, Adriaan

(56) References cited:
- WO-A1-2004/085343
- WO-A1-2007/117104
- DE-A1- 10 131 347
- DATABASE WPI Week 200510 Thomson Scientific, London, GB; AN 2005-083526 XP002617030, & JP 2005 006597 A (SANPUKU SHOJI KK) 13 January 2005 (2005-01-13)
- DATABASE WPI Week 200428 Thomson Scientific, London, GB; AN 2004-299567 XP002617031, & JP 2004 097131 A (NIPPON JIKO KK) 2 April 2004 (2004-04-02)

## Description

The present invention relates to a method for producing coco peat plant growth substrate. According to another aspect the present invention relates to a coco peat plant growth substrate having a pH of less than 5. According to yet another aspect the present invention relates to the use of the coco peat plant growth substrate as a substrate for plant growth.

Coconuts are abundantly growing in coastal areas of tropical countries, such as India and Sri Lanka. The husk surrounding the nut is available as a cheap residue from the coconut production. This husk is composed of coir fibre and coco peat, which coir fibre is known for its application in woven carpets, ropes, brushes, matting and mattresses. The coco peat is traditionally accumulated in large piles or dumps as a waste product. However, more and more coco peat finds use in artificial potting composts.

This coco peat is also known as 'coir pith', 'coir fibre pith', 'coir dust', 'coir peat' or only as 'coir'. Coco peat generally has a pH in the range of 5.5 to 6.5 and can be used alone or mixed with other substrate materials.

The coco peat to be used as substrate in potting compost is normally subjected to a treatment relating to its adsorption complex. Coco peat has an adsorption complex which binds positively charged ions. Coco peat substantially binds potassium and sodium ions. However, during the cultivation with coco peat, its adsorption complex exchanges these potassium and sodium ions with calcium and magnesium ions. These calcium and magnesium ions, which are important nutriments for plant growth, are thus extracted from the growing medium, while potassium and sodium release excessively. This adsorption complex is a barrier for the use of coco peat as substrate.

The prior art method for producing coco peat to be used as substrate comprises several steps. This method starts with harvesting of the coco peat in for instance India and Sri Lanka. Then the harvested coco peat is washed with an excessive amount of freshwater. Subsequently the washed coco peat is admixed with calcium nitrate in order to provide calcium to the adsorption complex, while potassium and sodium come available. The resulting blend is subjected to a washing step with freshwater to elute the nitrate added and the released potassium and sodium from the calcium enriched coco peat. The final step occurring at the location where the coco peat is harvested, is to dry and compress the coco peat to form shippable bales or briquettes.

The shipped compressed coco peat is generally further subjected to a rehydration and enrichment step to provide a usable plant growth substrate. The compressed coco peat is first rehydrated and subsequently fertilizers such as potassium, phosphate and nitrate are added to provide plant growth substrates having balanced nutritional conditions.

This prior art method for producing coco peat plant growth substrate has several disadvantages. For example there are two washing steps involved, which include large amounts of freshwater. In general 300 cubic meter water is used for the production of one container coco peat plant growth substrate. Additionally, these large amounts of freshwater are used in tropical areas, such as India and Sri Lanka, where freshwater is scarce.

Another disadvantage is that the water used to elute is usually drained into the local soil and is not reused. Additionally, the water may comprise waste products which are introduced into the local environment. More specifically, the water used to elute nitrate, potassium and sodium introduces these products to the soil.

When nitrate, potassium and sodium are eluted from the coco peat, the nitrate and potassium are added again as fertilizers. Accordingly, this elution and subsequently the addition of nitrate and potassium is an extra method step and cannot be designated as an efficient use of the raw materials.

JP2005006597 discloses the modification of coco dust by adjusting the electrical conductivity of coco dust to 1.0 mS/cm or less, pH of the coco dust to 1.5-3.5 using an acid such as phosphoric, nitric or acetic and then adjusting the pH 6.0-8.0 using an alkali.

JP2004097131 discloses the treatment of coconut palm dust with phosphoric acid or phosphate.

Considering the above, there is a need in the art for methods for producing coco peat plant growth substrate in a more efficient and sustainable way. Which method does, for example, not involve the waste of scarce freshwater. Which method, of course, provides coco peat plant growth substrate with equal or improved characteristics in comparison with conventionally produced coco peat plant growth substrates.

Therefore, it is an object of the present invention, among other objects, to provide a method for producing coco peat plant growth substrate. This objective, amongst other objectives, is met by a method as defined in the appended claim 1.

Specifically, this objective, amongst other objectives, is met by a method for producing coco peat plant growth substrate, or coco peat potting compost, which method comprises acidifying a coco peat by adding to the coco peat an aqueous solution comprising:
- 20 to 30 %(v/v) nitric acid;
- 5 to 15% (v/v) phosphoric acid; and
- 5 to 15% (v/v) sulfuric acid;
wherein 1 to 100 mol H⁺ is added per cubic meter coco peat, thereby providing coco peat plant growth substrate with a pH of less than 5.

The present inventors found that by a method according to the invention coco peat plant growth substrate, such as potting compost, is provided having an appropriate adsorption complex for the use of this substrate as a substrate for plant growth. Without being limited by theory, it is suspected that the H⁺ ions can release potassium and sodium from the adsorption complex.

The present method is advantageous since less washing steps are required for producing the coco peat plant growth substrate. More specifically, the prior art washing step to elute nitrate from the coco peat is avoided. Accordingly, the present method is more efficient since less method steps are involved and more sustainable since less freshwater is needed in areas were freshwater is scarce.

Another sustainability advantage of the present invention can be found in the use of the present aqueous solution. This solution is used to prepare the raw coco peat, however, its constituents are also important fertilizers for potting composts. Accordingly, as a result of this bipartite function, the addition of fertilizers is not longer required.

The coco peat is acidified by mixing the coco peat with an acid aqueous solution according to claim 1.

The aqueous solution according to the present invention is a mixture containing 20 to 30 %(v/v) nitric acid, 5 to 15% (v/v) phosphoric acid, 5 to 15% (v/v) sulfuric acid and water up to 100%.

A cubic meter (m³) of coco peat generally contains approximately 380 kg coco peat.

According to the present invention 1 to 100 mol H⁺ is added per cubic meter coco peat. Such as for example 1 to 80, 1 to 60, 5 to 100, 5 to 80 or 10 to 50 mol H⁺. Preferably contains 1 liter of said aqueous solution 10 mol H⁺. Accordingly, preferably is 0.1 to 10 liter of the present aqueous solution added per cubic meter coco peat, such as 0.1 to 5, 0.5 to 5, 1 to 5 or 2 to 8 liter of the present aqueous solution.

According to the present invention a coco peat plant growth substrate is provided with a pH of less than 5, such as less than 4, less than 3, or such as 3 to 4 or 2 to 4.

In a preferred embodiment of the present invention 5 to 45 mol H⁺ is added per cubic meter coco peat. For example 5 to 40, 5 to 35, 5 to 30, 10 to 40 or 15 to 40 mol H⁺ is added per cubic meter coco peat.

In a preferred embodiment of the method of the present invention comprises the present aqueous solution
- 22 to 27 % (v/v) nitric acid;
- 6 to 11 % (v/v) phosphoric acid; and
- 5 to 10 % (v/v) sulfuric acid.

In a more preferred embodiment of the method of the present invention the present aqueous solution comprises
- 24 to 25 % (v/v) nitric acid;
- 8 to 9 % (v/v) phosphoric acid; and
- 7 to 8 % (v/v) sulfuric acid.

In yet another preferred embodiment of the invention the method comprises the steps of:
(a) providing the coco peat;
(b) washing the coco peat with water;
(c) acidifying the washed coco peat by adding said aqueous solution; and
(d) drying the coco peat plant growth substrate.
According to this preferred embodiment dried coco peat plant growth substrate is obtained. This is advantageous since dried plant growth substrate is easier and cheaper to transport. For instance when the raw coco peat is provided in India and when treated according to the present invention, it is shipped in dried form to e.g. Europe.

In a preferred embodiment according to the present invention the acidified coco peat and the aqueous solution are mixed, preferably for 1 to 6 minutes, such as 2 to 6 or 3 to 5 minutes. According to this embodiment the mixture of coco peat and the present aqueous solution are mixed in order to distribute the aqueous solution homogeneously in the coco peat. Preferably this mixing step is performed before the present step (d) of drying the acidified coco peat. In other words, the acidifying of the coco peat comprises preferably adding and mixing of the present aqueous solution through the coco peat.

In a preferred embodiment according to the present invention the method comprises a compressing and/or a
rehydrating step. These compressing and/or rehydrating step are preferably performed after the acidified coco peat is dried. For instance dried coco peat blocks are compressed to briquettes for further optimizing its transport. Subsequently, when the compressed briquettes are shipped they can be rehydrated to enable further use of the coco peat.

In a preferred embodiment according to the present invention the coco peat plant growth substrate is mixed with non-coco peat plant growth substrate ingredients. This is advantageous since coco peat plant growth substrate can be mixed with other ingredients to create the desired product. Examples of non-coco peat plant growth substrate ingredients are perlite, bark, manure, sand, glass beads, peat (moss) and composted agricultural waste.

An example of another non-coco peat plant growth substrate ingredient is calcium (which is also designated as lime). Calcium can be used to increase the pH of the coco peat plant growth substrate, in case coco peat with an increased pH is desired.

The coco peat plant growth substrate provided by the present method is advantageous in relation to prior art coco peat plant growth substrates. An example hereof is the pH of the product obtained. The pH is less than 5, which is advantageous for acid loving plants, such as rhododendrons. Additionally, the pH of a coco peat plant growth substrate with a pH of less than 5 can be increased easily by liming the substrate.

Considering these advantageous characteristics, the present invention relates, according to another aspect, to coco peat plant growth substrate obtainable by the method according to the present invention.

According to yet another aspect the present invention relates to coco peat plant growth substrate having a pH of less than 5, such as less than 4, less than 3, 2 to 3, 2 to 4 or 2 to 4.5. This product is advantageous since it can be used as, for instance, a substitute for peat or turf. Peat is used in horticulture as a substrate for plant growing, in order to lower the pH of the soil. However peat is only limited available and its use involves large amounts of CO₂ emission. Accordingly, peat can hardly be designated as sustainable. Considering these drawbacks of peat as a substrate, it is advantageous that the present invention provides peat free cultivation.

In a preferred embodiment has the present coco peat plant growth substrate a pH in the range of 2.5 to 4.5, preferably in the range of 3 to 4.

Considering the advantageous use of the present coco peat plant growth substrate, the present invention relates, according to another aspect, to the use of the present coco peat plant growth substrate as a substrate for plant growth, or as potting compost. By this use is encompassed the use of solely the present coco peat plant growth substrate and also its use wherein the coco peat plant growth substrate is mixed with other plant growth substrate ingredients.

The principles of the present invention will be further detailed in the examples showing preferred embodiments of the present invention.

### EXAMPLES

### Example 1

100 m³ prewashed coco peat was fed into a continuous process while 0.5 liter of an acid mixture was added per cubic meter coco peat. The acid mixture contained:
- 24.7 % (v/v) nitric acid;
- 8.4 % (v/v) phosphoric acid;
- 7.4 % (v/v) sulfuric acid;
- 59.5 % (v/v) water.

After mixing of each cubic meter coco peat with the acid mixture during 4 minutes using a worm wheel, 100 m³ coco peat plant growth substrate was obtained. The pH of the obtained coco peat plant growth substrate was 3.9. The plant growth substrate contained the fertilizers nitrate, potassium and phosphate, while the adsorption complex was substantially free from potassium and sodium ions.

### Example 2

100 m³ prewashed coco peat was fed into a continuous process while 8 liter of the same acid mixture of example 1 was added per cubic meter coco peat.

After mixing of each cubic meter coco peat with the acid mixture during 4 minutes using a worm wheel, 100 m³ coco peat plant growth substrate was obtained. The pH of the obtained coco plant growth substrate was 3.2. The substrate contained the fertilizers nitrate, potassium and phosphate, while the adsorption complex was substantially free from potassium and sodium ions.

### Example 3

100 m³ of raw coco peat was washed with 17000 liter water. Subsequently the washed coco peat was acidified by adding 8 liter of the same acid mixture of example 1 per cubic meter coco peat. Then the mixture of coco peat and acid mixture was mixed during 4 minutes per cubic meter coco peat. Finally was the coco peat dried and compressed to provide coco peat plant growth substrate briquettes. The pH of the obtained coco peat plant growth substrate was 3. The plant growth substrate contained the fertilizers nitrate, potassium and phosphate, while the adsorption complex was substantially free from potassium and sodium ions.

## Claims

1. Method for producing coco peat plant growth substrate, which method comprises acidifying a coco peat by adding to the coco peat an aqueous solution comprising:
- 20 to 30 % (v/v) nitric acid;
- 5 to 15 % (v/v) phosphoric acid; and
- 5 to 15 % (v/v) sulfuric acid.
wherein 1 to 100 mol H⁺ is added per cubic meter coco peat, thereby providing coco peat plant growth substrate with a pH of less than 5.

2. Method according to claim 1, wherein 5 to 45 mol H⁺ is added per cubic meter coco peat.

3. Method according to claim 1 or claim 2, wherein said aqueous solution comprises:
- 22 to 27 % (v/v) nitric acid;
- 6 to 11 % (v/v) phosphoric acid; and
- 5 to 10 % (v/v) sulfuric acid.

4. Method according to any of the claims 1 to 3, wherein said aqueous solution comprises:
- 24 to 25 % (v/v) nitric acid;
- 8 to 9 % (v/v) phosphoric acid; and
- 7 to 8 % (v/v) sulfuric acid.

5. Method according to any of the claims 1 to 4, comprising the steps of:
(a) providing the coco peat;
(b) washing the coco peat with water;
(c) acidifying the washed coco peat by adding said aqueous solution; and
(d) drying the coco peat plant growth substrate.

6. Method according to any of the claims 1 to 5, wherein the acidified coco peat and the aqueous solution are mixed, preferably for 1 to 6 minutes.

7. Method according to any of the claims 1 to 6, further comprising a compressing and/or a rehydrating step.

8. Method according to any of the claims 1 to 7, wherein the coco peat plant growth substrate is mixed with non-coco peat plant growth substrate ingredients.

9. Coco peat plant growth substrate obtainable by the method according to any of the claims 1 to 8.

10. Use of the coco peat plant growth substrate according to claim 9 as a substrate for plant growth.

## Patentansprüche

1. Verfahren zur Herstellung von Kokospalmentorfwachstumssubstrat, wobei das Verfahren das Ansäuern eines Kokostorfs durch Zusetzen einer wässrigen Lösung zu dem Kokostorf aufweist, die aufweist:
- 20 bis 30% (v/v) Salpetersäure;
- 5 bis 15% (v/v) Phosphorsäure; und
- 5 bis 15% (v/v) Schwefelsäure,
wobei 1 bis 100 Mol H⁺ pro Kubikmeter Kokostorf zugesetzt werden, wodurch Kokospalmentorfwachstumssubstrat mit einem pH-Wert von weniger als 5 bereitgestellt wird.

2. Verfahren nach Anspruch 1, wobei 5 bis 45 Mol H⁺ pro Kubikmeter Kokostorf zugesetzt werden.

3. Verfahren nach Anspruch 1 oder 2, wobei die wässrige Lösung aufweist:
- 22 bis 27% (v/v) Salpetersäure;
- 6 bis 11% (v/v) Phosphorsäure; und
- 5 bis 10% (v/v) Schwefelsäure.

4. Verfahren nach einem der Ansprüche 1 bis 3, wobei die wässrige Lösung aufweist:
- 24 bis 25% (v/v) Salpetersäure;
- 8 bis 9% (v/v) Phosphorsäure; und
- 7 bis 8% (v/v) Schwefelsäure.

5. Verfahren nach einem der Ansprüche 1 bis 4, das die folgenden Schritte aufweist:
(a) Bereitstellen des Kokostorfs;
(b) Waschen des Kokostorfs mit Wasser;
(c) Ansäuern des gewaschenen Kokostorfs durch Zusetzen der wässrigen Lösung; und
(d) Trocknen des Kokospalmentorfwachstumssubstrats.

6. Verfahren nach einem der Ansprüche 1 bis 5, wobei der angesäuerte Kokostorf und die wässrige Lösung vermischt werden, vorzugsweise für 1 bis 6 Minuten.

7. Verfahren nach einem der Ansprüche 1 bis 6, das ferner einen Verdichtungs- und/oder einen Rehydrierungsschritt aufweist.

8. Verfahren nach einem der Ansprüche 1 bis 7, wobei das Kokospalmentorfwachstumssubstrat mit Nicht-Kokospalmentorfwachstumssubstratzutaten vermischt wird.

9. Kokospalmentorfwachstumssubstrat, das mit dem Verfahren nach einem der Ansprüche 1 bis 8 erhältlich ist.

10. Verwendung des Kokospalmentorfwachstumssubstrats nach Anspruch 9 als ein Substrat für die Pflanzenzucht.

## Revendications

1. Procédé de production d'un substrat de croissance de plante à base de tourbe de coco, lequel procédé comprend l'acidification d'une tourbe de coco par l'ajout à la tourbe de coco d'une solution aqueuse comprenant :
- 20 à 30 % (v/v) d'acide nitrique ;
- 5 à 15 % (v/v) d'acide phosphorique ; et
- 5 à 15 % (v/v) d'acide sulfurique.
dans lequel 1 à 100 moles de H⁺ sont ajoutés par mètre cube de tourbe de coco, pour ainsi fournir un substrat de croissance de plante à base de tourbe de coco ayant un pH inférieur à 5.

2. Procédé selon la revendication 1, dans lequel 5 à 45 moles de H⁺ sont ajoutés par mètre cube de tourbe de coco.

3. Procédé selon la revendication 1 ou la revendication 2, dans lequel ladite solution aqueuse comprend :
- 22 à 27 % (v/v) d'acide nitrique ;
- 6 à 11 % (v/v) d'acide phosphorique ; et
- 5 à 10 % (v/v) d'acide sulfurique.

4. Procédé selon l'une quelconque des revendications 1 à 3, dans lequel ladite solution aqueuse comprend :
- 24 à 25 % (v/v) d'acide nitrique ;
- 8 à 9 % (v/v) d'acide phosphorique ; et
- 7 à 8 % (v/v) d'acide sulfurique.

5. Procédé selon l'une quelconque des revendications 1 à 4, comprenant les étapes suivantes :
(a) la fourniture de la tourbe de coco ;
(b) le lavage de la tourbe de coco avec de l'eau ;
(c) l'acidification de la tourbe de coco lavée par l'ajout de ladite solution aqueuse ; et
(d) le séchage du substrat de croissance de plante à base de tourbe de coco.

6. Procédé selon l'une quelconque des revendications 1 à 5, dans lequel la tourbe de coco acidifiée et la solution aqueuse sont mélangées, de préférence pendant 1 à 6 minutes.

7. Procédé selon l'une quelconque des revendications 1 à 6, comprenant en outre une étape de compression et/ou de réhydratation.

8. Procédé selon l'une quelconque des revendications 1 à 7, dans lequel le substrat de croissance de plante à base de tourbe de coco est mélangé avec des ingrédients de substrat de croissance de plante qui ne sont pas de la tourbe de coco.

9. Substrat de croissance de plante à base de tourbe de coco pouvant être obtenu par le procédé selon l'une quelconque des revendications 1 à 8.

10. Utilisation du substrat de croissance de plante à base de tourbe de coco selon la revendication 9 comme substrat pour la croissance des plantes.
